# EUROPEAN PATENT APPLICATION

(11) **EP 2 857 304 A1**
(43) Date of publication of application: **08.04.2015**
(21) Application number: 13796515.8
(22) Date of filing: 03.06.2013
(51) Int. Cl.: B62M 3/08

(54) **SEMI-FIXED TYPE SHOE-FIXING SHAFT**

(30) Priority: 01.06.2012 JP 2012137288
(71) Applicant: Koike, Yuichiro, Tokyo 170-0013 (JP)
(72) Inventor: Koike, Yuichiro, Tokyo 170-0013 (JP)
(74) Representative: MacDougall, Alan John Shaw
(86) International application number: PCT/JP2013/065374
(87) International publication number: WO 2013/180303

(57) **Abstract**

Provided is a semi-fixed type shoe-fixing shaft that includes a shaft rotatably mounted on a crank, a ratchet pawl swingably installed on the shaft, a ratchet engaging tooth fixed to the crank so as to catch the ratchet pawl, a ratchet spring fixed to the shaft so as to swing the ratchet pawl, a ratchet control lever connected to the ratchet spring and slidably installed on the shaft, and a shoe fixing hook fixed to the shaft. The shoe fixing hook and a fastener fixed to a cycling shoe are coupled. Thereby, the cycling shoe and the shaft are fixed, and a force for stretching an ankle is transmitted through the cycling shoe and the shaft as a force for rotating the crank. Muscles around a calf for moving the ankle can be used as a rotational force for the crank.

## Description

### Technical Field

The present invention relates to a semi-fixed type shoe-fixing shaft that, in either a propulsion apparatus such as a bicycle or a training machine having a rotary crank mechanism that is mainly powered by feet of a human being, enables strength of the ankle which has not been used so far to be used to rotate a crank as a new power source, generates a new propulsive force of the bicycle by rotational motion of the crank caused by the new power source, uses the strength of the ankle as a new power source of the bicycle by transmitting the strength of the ankle as torque to the crank even in a region where it is difficult to transmit a stepping force when the crank is lifted up from a bottom dead point and when the crank is at a top dead point, fills a gap between driving forces generated during alternation of left stepping and right stepping that alternate with each other, and realizes efficient propulsion of the bicycle.

### Background Art

A bicycle is very popular as a recreation, a moving means, or a competitive sport, and is prevalent in the whole world. For this reason, in the bicycle industry, various bicycle parts are highly standardized and constantly continue to be improved. One of the bicycle parts of which design is greatly reviewed among them is a pedal device for the bicycle.

A propulsion apparatus representative of the bicycle according to rotation of a crank shows a highest level of efficiency, and further improvement in efficiency according to the present invention expands a possibility of using the bicycle, and contributes to improvement in health due to promotion of exercise or improvement in environmental issues caused by suppressing consumption of energy depending on a moving means such as a vehicle or a bike. However, as for examination of the efficiency, a crank mechanism has a region in which no stepping force is transmitted to the crank at a position at which the crank is lifted up from a top dead point and a bottom dead point, which becomes a significant issue regarding the crank rotation.

To solve this problem, there is an invention relating to a pedal device (see PTL 1 (JP 6-156356 A) and PTL 2 (JP 2002-240770 A)). Both the pedal devices described in the patent literatures do not comply with unified standards of the bicycle, and thus it is considered that an initial investment and a spread cost thereof are very increased. There is a strong demand for invention of an easy and basic device that does not have an influence on existing standards among the bicycle standards that are used in the world and are being highly made common or standard.

In a method of rotating the crank mechanism, researches are made in many pedaling techniques in addition to simple stepping. For example, approaches to various kinematic examinations into efficient crank rotation, for instance, during which a pedal is not stepped on at a top dead point but is pushed in a forward direction are performed.

It is known that the knee is easily wounded during physical exercise in a state in which it is bent at 90 degrees or more. When pedaling of pushing forward the pedal using the knee at the top dead point is performed, the knee is bent at 90 degrees or more, which may be responsible for an injury to the knee.

As results of the researches into the pedaling technique, strength of the calf is ineffective as power for rotating the pedal, and pedaling by which an angle of the ankle is changed, which is called ankling, should be avoided.

Some athletes actively conduct the ankling to obtain high results. However, from the viewpoint of the efficiency in the crank mechanism of the present situation, it is considered that the ankling should be avoided.

On the other hand, muscles of the calf have relatively strong strength in view of a structure of the human body, and thus are requested to make active use, for instance, in order to enhance running or jumping ability. When such muscular strength can be applied to the pedaling, the pedaling efficiency can be increased.

There is an exercise function substitution machine having the crank mechanism, called an exercise bike, for the purpose of the promotion of health or the training of physical strength in addition to bicycle athletes. The exercise bike is installed in training facilities in the world. In the case of the exercise bike using an unfixed pedal so far, a training effect on the muscles of the calf can be little expected.

Contrary to the present invention of which object is to provide the strength of the ankle as the new source of power in the rotation of the crank, there is an invention of which object is to prevent misstepping of a pedal and to improve difficulty of pedal stepping caused by toes, which has resolving means similar to that of the present invention, and which horizontally maintains a pedal body at all times (see PTL 3 (JP 2004-231136 A)). Unbending action of the ankle from the bent state is important in order to improve the crank rotation efficiency at the top dead point using the strength of the calf which is the object of the present invention. However, in the case of using a pedal device described in PTL 3, since the pedal body is horizontally maintained at all times, an angle of the ankle is not intentionally changed, and an effect is restricted.

Further, when the pedal device described in PTL 3 is installed on the bicycle, a position of the pedal body should be installed outside apart from a frame in order to apply significant correction to the crank portion. For this reason, a rider assumes a posture in which feet are widely straddled when stepping on the pedals. In this case, since distortion between a rotational orbit of the pedal and a stepping orbit of the foot occurs, the crank rotation efficiency is worsened to impede achievement of the object of the present invention. In addition, it is necessary to install the device on a bicycle body frame as well as the crank and the pedal. As such, a great deal of cost is needed to prepare new production facility for implementation. Likewise, since strict regulation is imposed on the bicycle used to maintain fairness of a bicycle competition, such a significant change is considered to be unacceptable. If the use of the pedal device described in PTL 3 is pushed ahead in the bicycle competition, a change in regulations themselves of each bicycle competition on a global scale should be requested. This, of course, requires many processes and costs and also makes it impossible to change the regulations. As such, the use of the pedal device is difficult.

In this way, it is required to invent an easy and basic device that does not have an influence on existing standards among the bicycle standards that are highly made common or standard by global standards.

A technique for fixing the sole of a foot and a shaft has already been used as a clipless pedal since the 1980s.

As an invention that has a different object from the object of the present invention which is to provide the strength of the ankle as the new source of power in the rotation of the crank and that has analogy of using a ratchet mechanism with respect to some components, there is an invention that provides a pedal having a great plate to change a stepping position and is thereby intended to increase a length of a crank to use a principle of a lever (see PTL 4 (JP 2-68288 A), PTL 5 (JP 64-28089 A), PTL 6 (JP 63-173782 A), and PTL 7 (JP 1-182186 A)).

These existing inventions are intended to effectively use a stepping force according to the principle of the lever, whereas the present invention is intended to use the strength of the ankle as the new power source without taking into consideration any use of the stepping force, and provides a solution to a different problem.

These existing inventions are techniques regarding the "pedal" having the plate for stepping, and are inventions relating to a completely different technical field from the present invention that is a technique relating to the "shaft" functioning to fix the sole of the foot.

These existing inventions are intended to make efficient use of the principle of the lever, and thus require the plate for stepping. The present invention neither uses the stepping force nor needs to use the principle of the lever. As such, the present invention does not need to use the plate, further should exclude the plate in order to reduce weight, and is an invention relating to a different technical field.

These existing inventions equip the pedal with the long stepping plate for serving to lengthen the length of the crank so as to exert the principle of the lever. In the present invention, neither the pedal having the plate nor the principle of the lever is used. Instead, the function of fixing the sole of the foot and the shaft is used, and an operation of rotating the crank using the strength of the ankle as the new power source is exerted. The existing inventions and the present invention have nothing in common with each other in the function and operation, and have completely different effects.

According to these existing inventions, it is described that, when the invention is actually used, the invention becomes a long crank situation according to a stepping method of entirely stepping down on a front plate with a floating feeling without stepping on a rear plate during stepping on the pedal. If an examination is made of a possibility of mounting the function of fixing the foot sole and the shaft that are indispensable to the present invention along with the pedal having the plate which belongs to these existing inventions, it is apparent that, if the sole of the foot and the plate of the pedal are fixed, an operation of intentionally applying a force only to the front plate of the pedal is entirely impossible, and no effects of these existing inventions can be produced. For this reason, the function of fixing the foot sole and the shaft is a function that is never considered by those skilled in the art who have made the existing inventions. On the other hand, the function of fixing the foot sole and the shaft in the present invention is indispensable, and is a starting point for examination. As such, it is entirely impossible to conceive the present invention in view of these existing inventions.

These existing inventions are intended to make efficient use of the principle of the lever. As such, when an examination is made to apply further improvement, the front plate is further enlarged, or an examination into a shape or an installing method of the front plate is advanced, so that making an examination of excluding the plate naturally contradicts the objects of these existing inventions. For this reason, when an examination is made in view of these existing inventions, it is impossible to conceive the present invention regardless of the use of the principle of the lever and the use of the pedal having the plate.

Since these existing inventions can sufficiently use the principle of the lever if a variable gear generally installed on an existing bicycle is used, an effect of increasing/decreasing weight of the stepping can be simply substituted. In these existing inventions, a risk of misstepping is high because it is necessary to change the stepping position during actual pedaling, and the pedal is not rather strongly stepped on because the stepping position gets away from a saddle. If a leverage effect is excessively strong, there is a big problem in terms of practical use including that a speed of the bicycle is reduced to impede stable pedaling. The effects as the invention are very restricted. In contrast, the present invention makes it possible to use the muscle that is called the calf, is very strong, but is not used in the bicycle so far, as the new power source in a method which no one conceives and which is very simple. Further, since the rotation of the crank is not also impeded by the stepping so far, the present invention has a greatly conspicuous effect of remarkably improving the propulsive force of the bicycle. The effects of the present invention are roughly estimated on the premise of the strength of general muscle. On the assumption that a force of rotating the crank to 64 degrees with a force, 30 kgf, of stretching the ankle can be added in the present invention in addition to a force of rotating the crank to 150 degrees with a stepping pressure, 40 kgf, exerted by a work load of the general stepping, the present invention produces an outstanding effect of improving a work load as high as 40% in addition to the work load of the stepping. If a propulsive force as high as 40% is improved, outstanding effects of, for instance, performing a competition of a mountain course to which general athletes have difficulty in challenging so far, renewing the highest speed of the bicycle, and remarkably improving a flight distance in a human-powered aircraft can be produced in all the devices having the crank mechanism. In this way, it is apparent that, in comparison with the inventions described in PTL 4, PTL 5, PTL 6, and PTL 7, the present invention has outstanding effects.

Since these existing inventions use the stepping force, a rider who cannot put a force due to trouble to the knees or the hips cannot use the stepping force. In contrast, the present invention never uses the stepping force. As such, if the force can be put into the ankle, the present invention is used to have an outstanding effect of controlling the bicycle.

In the existing inventions, stepping feeling becomes light due to the effect of the principle of the lever caused by the long crank. However, an actual propulsive force has no change, and thus a propulsive speed is reduced along with an increase in effect. When a speed is extremely reduced, stable pedaling is obstructed, and thus only the restricted effect is produced under given conditions. In contrast, the present invention can additionally use the very strong muscle, which is not entirely used so far, as the new power source, and remarkably improves the propulsive force of the bicycle, and thus has an effect of improving a driving force including easily ascending on a sloping road. Further, the present invention has an entirely different outstanding effect from the existing inventions in that an effect is also produced on improvement of a driving speed in the case of speed-up on a flatland.

20 years have already elapsed after these existing inventions have been made, but an invention itself in which a pedal shaft and a shoe are fixed is made much earlier than that time. It is considered to be apparent that such an invention originated or triggered from these inventions has already been conceived. The fact that the outstanding effect of the present invention has not yet been used is an objective proof showing that the present invention cannot be easily conceived from these existing inventions.

### Summary of Invention

### Technical Problem

The previous crank mechanisms have a problem in that the muscles of the calf having relatively strong strength in the human body cannot be applied.

Depending on upward and downward motion caused by stepping foot, most rotational force is obtained in the previous crank mechanisms. The crank position is present at an upper or lower side of a rotational period, and the presence of crank rotational positions at which the stepping force of the foot cannot be converted into the rotational force of the crank mechanism and which are called the top and bottom dead points in the rotary crank mechanism becomes a problem in terms of the efficient rotational motion of the crank mechanism.

In order to improve efficiency, it is essential for any bicycle athlete to learn a pedaling technique using the knee at the top dead point. However, on the typical bicycle standards, the knee of the athlete is frequently kept bent at 90 degrees or more at the top dead point. In this case, an excessive burden is imposed on a knee joint, and is thus responsible for fatigue or injury of the muscle and the joint, which becomes a problem.

As the premise regarding the review of a mounting method of a new technique relating to the bicycle, standards for the crank mechanism are highly standardized because the bicycle is used in the world. The realization of an idea that the standards are needed to change incurs expenses to change the standards on a global scale. The mounting method without changing the existing standards for the crank and the bicycle body becomes a problem.

Since the typical pedal has a freely rotating structure, an extra force should be put to control rotation during the stepping, and becomes a factor of impeding efficient pedaling.

The present invention has been made taking such situations into consideration, and an object of the present invention is to provide a semi-fixed type shoe-fixing shaft that allows the strength of an ankle which has not been used so far to be used for rotation of a crank as a new power source depending on a simple structure complying with common bicycle standards.

### Solution to Problem

A semi-fixed type shoe-fixing shaft according to the present invention has a function of fixing the sole of a foot and a shaft using a cycling shoe having a fastener generally called a cleat and the shaft having a hook fixing the fastener. The shaft is installed to be rotatable relative to a crank. The shaft has a ratchet function, and thereby is not rotated in a forward rotational direction of the crank, and can be freely rotated in the opposite direction.

A force for stretching an ankle becomes a force for rotating the cycling shoe and the shaft, is received by the ratchet function, and is converted into a force for rotating the crank. When the ankle is not stretched, a ratchet becomes free in the opposite direction, and does not obstruct rotation of the crank.

A ratchet pawl or a ratchet spring is installed to be able to be fixed at a position at which the ratchet function is made ineffective, and can arbitrarily control effects of the present invention. A ratchet control lever is connected to the ratchet spring, and is installed to be slidable to the shaft. With this configuration, validation or invalidation of the ratchet function can be arbitrarily controlled by operating the ratchet control lever.

The shaft is equipped with a rotatable base. A hook for fixing the cycling shoe is installed on the base. With this configuration, the shaft fixed to an existing crank can be used as it is.

A part of the function of the present invention such as the ratchet pawl is removably installed on the cycling shoe. The cycling shoe and the shaft are fixed, and thereby the effects of the present invention can be carried out.

Multiple ratchet engaging teeth and multiple ratchet pawls may be installed, and a position at which an effect is produced can be changed and restricted.

### Advantageous Effects of Invention

In the present invention, only the strength of an ankle is used without using a stepping force at all, and muscles around the calf for moving the ankle that have not been used so far, but have very strong strength in view of the structure of a human body can be used as a rotational force of the crank.

As the muscles that have not been used so far are used, it is possible to purely increase a constant driving force without exerting an influence on an existing stepping force which a rider has.

In the present invention, the stepping force is never used. For this reason, if a rider who cannot put a force due to trouble to the knees or the hips can put a force into his/her ankle, the bicycle that cannot be used so far can be controlled by the present invention.

The effect of the present invention is not a reduction in a stepping pressure during a ride by using the principle of the lever to reduce a speed but an improvement in pure driving force. For this reason, the present invention makes it possible to ride on a sharper sloping road without reducing a propulsive speed, and to ride with a heavier load.

Since the present invention improves the pure driving force, an average speed on a flatland or a highest speed at a competition can be improved. Thereby, outstanding effects of, for instance, performing a competition of a mountain course to which general bicycle athletes have difficulty in challenging so far, renewing the highest speed of the bicycle, and remarkably improving a flight distance in a human-powered aircraft can be produced in all the devices having the crank mechanism.

When a long distance ride is performed, only the stepping muscles are used so far. However, since the muscles of the ankle can also be adapted to make efficient use by the present invention, a locally applied load is dispersed, and a fatigue is remarkably reduced.

When the effects of the present invention are simply estimated on the premise of the strength of general muscles, and when the force of rotating the crank to 64 degrees with a force, 30 kgf, of stretching the ankle can be added in the present invention in addition to the force of rotating the crank to 150 degrees with a stepping pressure, 40 kgf, exerted by a work load of the general stepping, the present invention produces an outstanding effect of improving a work load as high as 40%.

Since accurate comparison is difficult due to a difference in muscle from person to person, in a case that a small effect is conservatively estimated, and only an increase of about 5% is obtained, such an increase is purely added to an existing propulsive force. Accordingly, even an increase in the propulsive force of about 5% becomes an outstanding effect in the bicycle competition of striving to shorten a second.

By using the strength of the calf to stretch the ankle according to the present invention, generation of a rotational force around the bottom dead point in the crank rotational motion is recorded as the effect of the invention. In the semi-fixed type shoe-fixing shaft for carrying out the present invention, if the ankle is stretched at the bottom dead point, the foot sole and the shaft are fixed, and the force for rotating the shaft is generated. Such a force is received by the ratchet mechanism, and is transmitted to the crank as the force for rotating the crank. For this reason, the crank is lifted up backward from the position of the bottom dead point. This is an effect of making it possible to use the strength of the ankle as the new power source. When only the stepping force found in an existing invention is used, it is impossible to rotate the crank from bottom up.

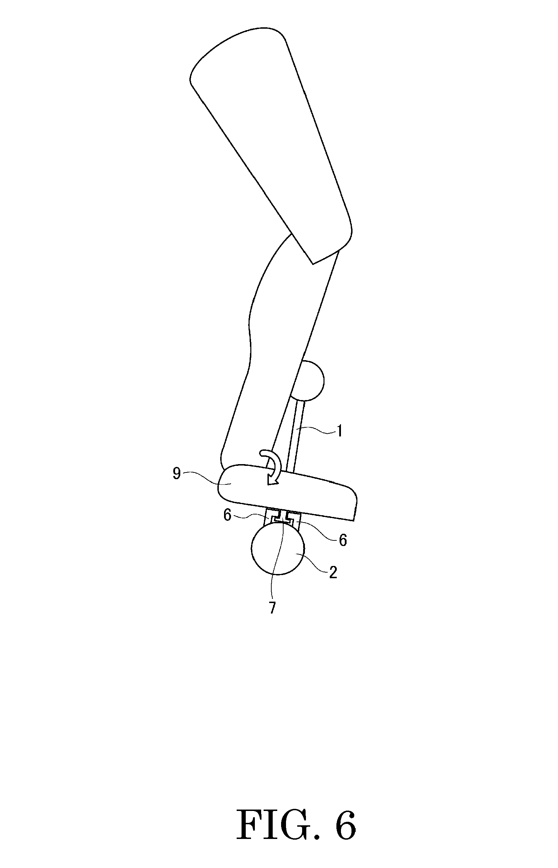

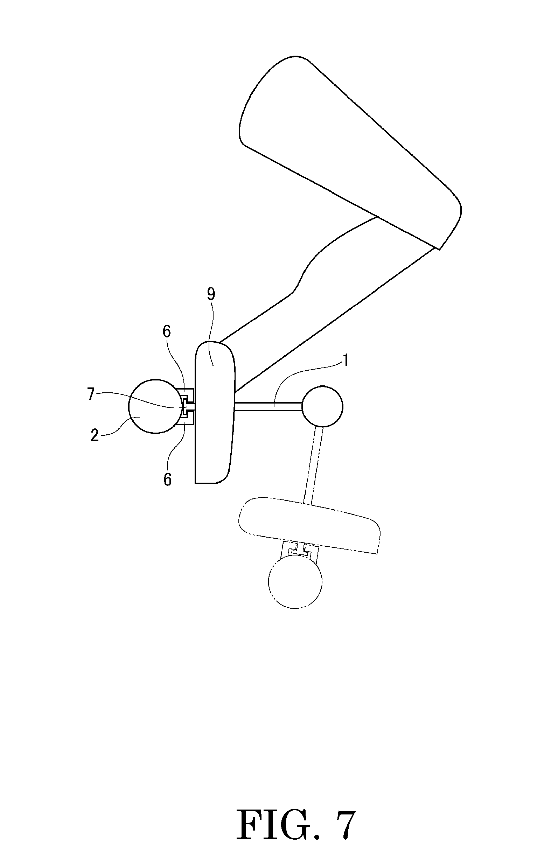

Figs. 6 and 7 illustrate an operation in which a position of the crank arrives at the bottom dead point, and the crank is lifted up from the bottom dead point to a backward rotational position by the effect of the invention under the situation in which the crank cannot be rotated with a typical stepping force.

If the ankle is stretched from the state of Fig. 6, a change in the angle of the ankle is transmitted from the shaft to the crank by means of the ratchet mechanism. The crank is rotated to a position at which the ankle is stretched as illustrated in Fig. 7. Thereby, it is possible to rotate the crank around the bottom dead point at which the crank is not rotated by the stepping. The ratchet mechanism becomes free in a direction in which the ankle is bent after the ankle is stretched, the ankle can be returned to the state before it is stretched.

The movement around the bottom dead point is shown in the description, but the effect can also be exerted at any position of 360 degrees. The movement can be done with favorite timing according to riding ease or situation of a rider. Further, bending and stretching of the ankle is performed each time, and thereby the movement can be done any number of times.

In the bicycle competition, a course is frequently set to ride on a flat road as well as a sloping road. In this case, a rider of the bicycle performs control that floats hips from a saddle, called stand-up riding. When the rider sits on the saddle and in a state in which the rider floats the hips, a stepping angle of the foot is different, and thus it is assumed that positions of the top and bottom dead points of a pedal orbit are changed. In this case, multiple ratchet gears that are set at different angles are installed, and validation or invalidation of the ratchet gear can be performed. The ratchet gear having an optimum angle is selected from the ratchet gears, and optimum application of the present invention can be performed when the stand-up riding is performed.

The stepping of the bicycle alternates right and left. Even when one foot is located at the bottom dead point and the other foot is located at the top dead point, a driving force can be provided, and efficient crank rotation can be realized without a moment when the driving force of the bicycle is lost.

A crank portion is adjacent to the ground in view of the structure of the bicycle, and thus is easily influenced by mud or dust. Contaminants such as mud has a possibility of impeding normal movement of the present invention, and thus an effort, for instance, to attach a cover of a mud guard to the crank portion is required. Further, when the mud still enters the crank portion, an interior needs to be cleaned. However, in this case, to disassemble and clean the parts requires a complicated procedure such as expertise or tools. In contrast, some of the components are installed at a shoe side. Thereby, although the crank portion is not disassembled, the ratchet pawl and the ratchet engaging tooth can be exposed only by taking off the cycling shoe, and thus easy cleaning is possible.

A training machine having the crank mechanism, called an exercise bike, is used by many users, because managed training can be performed without worrying about a fall or an accident. In the training using the exercise bike, aerobic exercise is frequently focused, and use of many muscles is required in order to perform effective exercise. Since the muscles of the calf which have not been used so far can be used for the rotation of the crank by the effects of the present invention, an effect of the training can be further increased.

When the crank having an existing bicycle standard is used with no change, the crank and the shaft are fixed. However, a rotary base is installed on the shaft, and a device for coupling with the cycling shoe or the ratchet mechanism is installed on the rotary base, and thereby the present invention can be carried out. Thereby, the existing crank can be used as it is, and the present invention can be easily applied to the existing bicycle.

### Brief Description of Drawings

Fig. 1 is a perspective view illustrating an example of an embodiment of the present invention.
Fig. 2 is a side view illustrating an example of the embodiment of the present invention when a cycling shoe and a shaft are coupled.
Fig. 3 is a perspective view illustrating an example of the embodiment of the present invention when multiple ratchets are installed.
Fig. 4 is a side view illustrating an example of the embodiment of the present invention when a part of ratchet mechanism is installed on the cycling shoe.
Fig. 5 is a perspective view illustrating an example of the embodiment of the present invention when a ratchet rotary base is used.
Fig. 6 is an operation explanatory view showing an effect of using the present invention.
Fig. 7 is an operation explanatory view showing the effect of using the present invention.

### Mode for Carrying Out the Invention

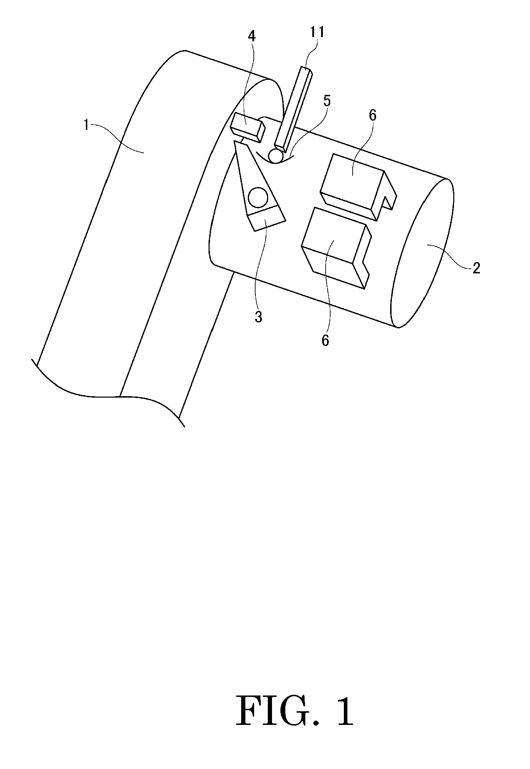

In Fig. 1, an example of an embodiment is illustrated in a perspective view. A semi-fixed type shoe-fixing shaft according to the present invention includes a shaft 2 that is rotatably mounted on a crank 1, a ratchet pawl 3 that is swingably installed on the shaft 2, a ratchet engaging tooth 4 that is fixed to the crank 1 so as to catch the ratchet pawl 3, a ratchet spring 5 that is fixed to the shaft 2 so as to cause the ratchet pawl 3 to swing, a ratchet control lever 11 that is connected to the ratchet spring 5 and is slidably installed on the shaft 2, and a shoe fixing hook 6 that is fixed to the shaft 2.

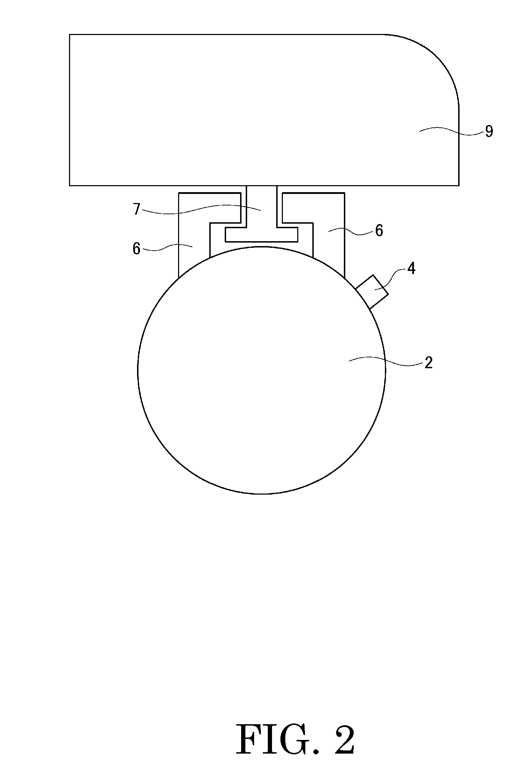

Fig. 2 illustrates an embodiment when a cycling shoe and a shaft are coupled. A fastener 7 is fixed to a sole of a cycling shoe 9. The shaft 2 has the shoe fixing hook 6. The fastener 7 is coupled to the shoe fixing hook 6 by lateral sliding, and thereby the cycling shoe 9 and the shaft 2 are fixed. Thereby, a force with which an ankle is stretched is transmitted through the cycling shoe 9 and the shaft 2 as a force with which the crank is rotated.

If the sole of a foot and the shaft can be fixed, any means may be used for a method of fixing the cycling shoe 9 and the shaft 2. Fixation based on a string or a band, or fixation using a magnetic force may be used. A function of fixing the foot sole and the shaft may also be replaced by use of a technique called a clipless pedal that has already been invented or is to be invented from now.

Here, if a ratchet mechanism for providing free rotation in one direction and preventing rotation in the other direction can be realized, the ratchet pawl 3 and the ratchet engaging tooth 4 may have any shape. In detail, they may be replaced, for instance, by a method of combining a quadrangular or semi-circular ratchet pawl with a quadrangular or semi-circular ratchet engaging tooth or a corrugated toothed wheel.

Here, the ratchet spring 5 may have any shape or be formed of any material if it applies a pressure for operating the ratchet pawl 3. To be specific, the ratchet spring 5 may not only assume an elastic member called a rubber or a spring, but also obtain the same effect by a repulsive force of a magnet or mechanical pressurization from a motor and the like.

Here, the ratchet pawl 3, the ratchet engaging tooth 4, and the ratchet spring 5 for realizing the ratchet mechanism may have any shape or be installed at any place if they mount a ratchet function in which a pawl and a toothed wheel rotate a meshing gear in one direction but do not rotate the gear without being meshed in the opposite direction. In detail, the present invention may also be carried out by a method of swingably installing the ratchet pawl 3 on the crank 1, fixing the ratchet engaging tooth 4 to the shaft 2, and installing the ratchet spring 5 on the crank 1 so as to press the ratchet pawl 3.

The ratchet spring 5 can be displaced to a position at which a pressure is not applied to the ratchet pawl 3 by sliding the ratchet control lever 11. Thereby, it is possible to control validation or invalidation of the effects of the present invention.

Here, if the ratchet function can be invalidated, a movement controlling method based on the ratchet control lever 11 may employ any embodiment. In detail, the ratchet spring may be adapted to be displaced by a motor instead of the ratchet control lever 11. The same effect can also be obtained by a method of connecting the ratchet control lever 11 to the ratchet pawl 3 so as to control swing or a method of stopping a function of a motor by radio or using a switch when the ratchet spring 5 itself is pressed against the ratchet pawl 3 by the motor.

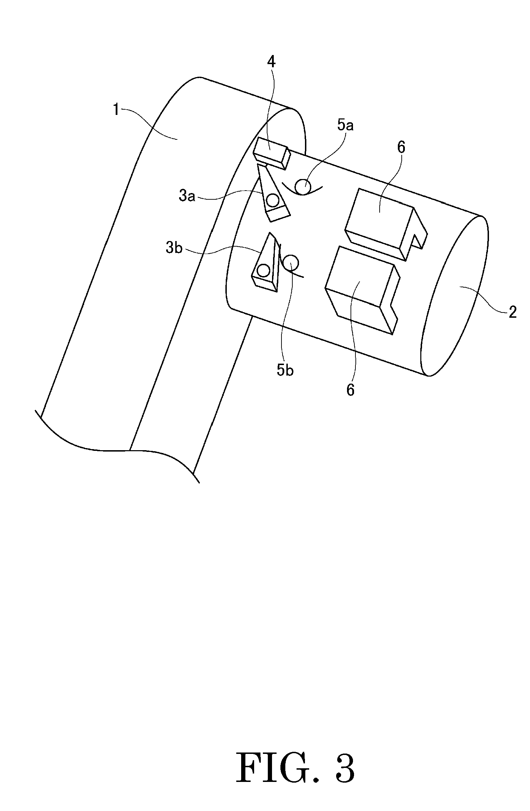

Fig. 3 illustrates an example of an embodiment in which multiple ratchet mechanisms are installed. The ratchet function is realized by installing the ratchet engaging tooth and the ratchet pawl at respective positions intended to realize a function of the present invention. Only a ratchet device of the position intended to use the function of the present invention may be made effective using the ratchet control lever 11.

Here, if there may be multiple positions at which the ratchet function is exerted, the ratchet mechanism may use any mounting method. In detail, a ratchet pawl 3a and a ratchet spring 5a corresponding to the ratchet pawl 3a and a ratchet pawl 3b and a ratchet spring 5b corresponding to the ratchet pawl 3b are installed with respect to one ratchet engaging tooth 4. The same effect can also be obtained by a method of making only any one of the ratchet pawl 3a and the ratchet pawl 3b effective using the ratchet control lever 11.

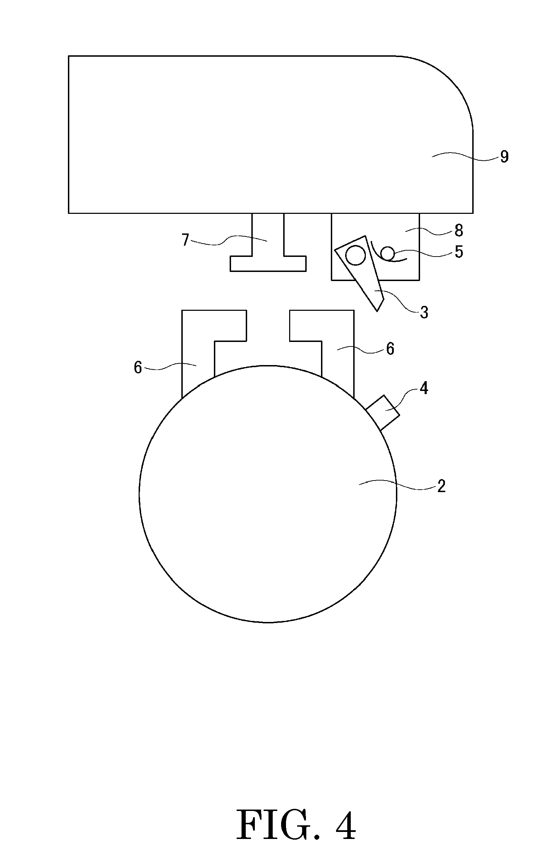

Fig. 4 illustrates a specific example of an embodiment when some components of the present invention are removably installed on the cycling shoe 9. When a ratchet plate 8 is fixed to the cycling shoe 9, the ratchet pawl 3 is swingably installed on the ratchet plate 8, the ratchet spring 5 is installed on the ratchet plate 8 such that a pressure is applied to the ratchet pawl 3, and the shaft 2 is coupled to the cycling shoe 9, the ratchet function of the present invention is realized, and thereby the present invention can be carried out.

Here, if the components of the present invention can be removably installed, any combination thereof may be used. To be specific, the present invention may also be similarly carried out by a method of installing only the ratchet spring 5 on the ratchet plate 8, or a method of installing only the ratchet pawl 3 on the ratchet plate 8.

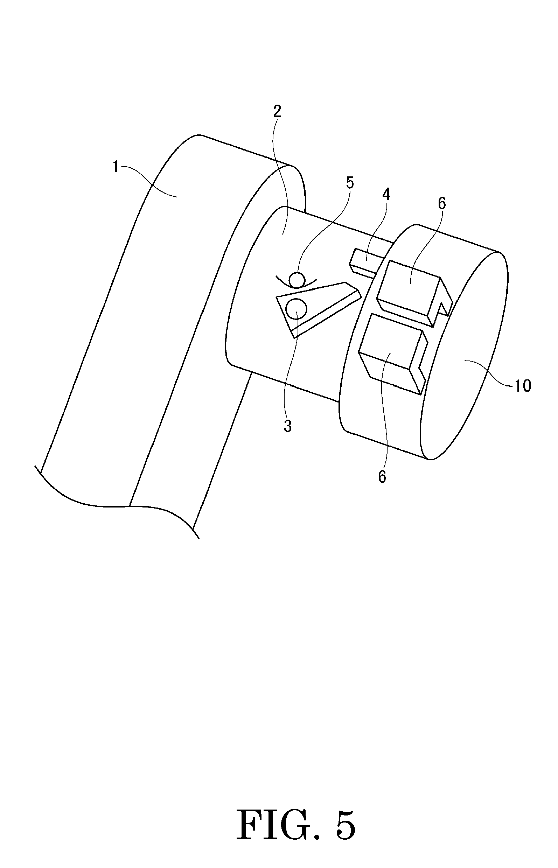

Fig. 5 illustrates a specific example of an embodiment when a shaft 2 and a crank 1 are fixed, and alternatively a rotatable ratchet rotary base 10 is installed on the shaft 2. A semi-fixed type shoe-fixing shaft includes a shaft 2 fixed to a crank 1, a ratchet rotary base 10 rotatably installed on the shaft 2, a shoe fixing hook 6 fixed to the ratchet rotary base 10, a ratchet engaging tooth 4 fixed to the ratchet rotary base 10, a ratchet pawl 3 swingably installed on the shaft 2, and a ratchet spring 5 fixed to the shaft 2 so as to swing the ratchet pawl 3.

### Industrial Applicability

The semi-fixed type shoe-fixing shaft according to the present invention can be used in a propulsion apparatus or a training machine such as a bicycle having a rotary crank mechanism using a foot of a human being as a main power.

### Reference Signs List

- 1:: crank
- 2:: shaft
- 3:: ratchet pawl
- 3a:: ratchet pawl
- 3b:: ratchet pawl
- 4:: ratchet engaging tooth
- 5:: ratchet spring
- 5a:: ratchet spring
- 5b:: ratchet spring
- 6:: shoe fixing hook
- 7:: fastener
- 8:: ratchet plate
- 9:: cycling shoe
- 10:: ratchet rotary base
- 11:: ratchet control lever

## Claims

1. A semi-fixed type shoe-fixing shaft comprising:
a crank and a shaft rotatably connected to the crank;
a ratchet pawl swingably installed on the shaft;
a ratchet engaging tooth fixed to the crank so as to catch the ratchet pawl;
a ratchet spring installed on the shaft so as to press the ratchet pawl;
a shoe fixing hook fixed to the shaft; and
a cycling shoe and a fastener fixed to the cycling shoe and couplable to the shoe fixing hook,
wherein a foot sole and the shaft are fixed to have a ratchet function.

2. The semi-fixed type shoe-fixing shaft according to claim 1, further comprising a ratchet control lever connected to the ratchet spring and slidably installed on the shaft,
wherein the ratchet control lever is slid to displace the ratchet spring to a position at which no pressure is applied to the ratchet pawl.

3. The semi-fixed type shoe-fixing shaft according to claim 1 or 2, wherein multiple combinations of the ratchet pawl, the ratchet engaging tooth, and the ratchet spring are installed.

4. The semi-fixed type shoe-fixing shaft according to any one of claims 1 to 3, wherein whole or parts of the components of the semi-fixed type shoe-fixing shaft are installed on the cycling shoe with the components divided.

5. The semi-fixed type shoe-fixing shaft according to any one of claims 1 to 4, comprising:
the shaft fixed to the crank;
a ratchet rotary base rotatably installed on the shaft;
the ratchet pawl swingably installed on the shaft;
the ratchet engaging tooth fixed to the ratchet rotary base so as to catch the ratchet pawl;
the ratchet spring installed on the shaft so as to press the ratchet pawl; and
the shoe fixing hook fixed to the ratchet rotary base.

6. A semi-fixed type shoe-fixing shaft comprising:
a crank and a shaft rotatably connected to the crank;
a ratchet pawl swingably installed on the shaft;
a ratchet engaging tooth fixed to the crank so as to catch the ratchet pawl;
a ratchet spring installed on the shaft so as to press the ratchet pawl; and
a shoe fixing hook fixed to the shaft,
wherein the shoe fixing hook is couplable to a fastener fixed to a cycling shoe.

7. A semi-fixed type shoe-fixing shaft comprising:
a crank;
a shaft fixed to the crank;
a ratchet rotary base rotatably installed on the shaft;
a ratchet pawl swingably installed on the shaft;
a ratchet engaging tooth fixed to the ratchet rotary base so as to catch the ratchet pawl;
a ratchet spring installed on the shaft so as to press the ratchet pawl; and
a shoe fixing hook fixed to the ratchet rotary base,
wherein the shoe fixing hook is couplable to a fastener fixed to a cycling shoe.
